(19)

**Europäisches Patentamt**
**European Patent Office**
**Office européen des brevets**

(11)   **EP 4 676 026 A1**

(12)   **EUROPEAN PATENT APPLICATION**

(43) Date of publication:
**07.01.2026 Bulletin 2026/02**

(21) Application number: **24306070.4**

(22) Date of filing: **02.07.2024**

(51) International Patent Classification (IPC):
**H04N 19/102** *(2014.01)*   **H04N 19/147** *(2014.01)*
**H04N 19/15** *(2014.01)*   **H04N 19/154** *(2014.01)*
**H04N 19/176** *(2014.01)*

(52) Cooperative Patent Classification (CPC):
**H04N 19/15; H04N 19/102; H04N 19/147;**
**H04N 19/154; H04N 19/176;** H04N 19/19;
H04N 19/192

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **URBAN, Fabrice**
  **35235 THORIGNE-FOUILLARD (FR)**
• **DUMAS, Thierry**
  **35700 RENNES (FR)**
• **GALPIN, Franck**
  **35235 THORIGNE-FOUILLARD (FR)**
• **FRANCOIS, Edouard**
  **35890 BOURG DES COMPTES (FR)**

(74) Representative: **Vossius & Partner**
**Patentanwälte Rechtsanwälte mbB**
**Siebertstraße 3**
**81675 München (DE)**

(54)   **DECODER-COMPLEXITY AWARE RATE DISTORTION OPTIMIZATION**

(57)   In one implementation, an encoder obtains a first value indicating a number of bits used to encode a current block in a picture, under a coding option, and obtains a second value indicating a distortion between a reconstructed version and an original version of the current block associated with the coding option. The encoder obtains a cost function based on the first value and the second value for the current block. The encoder also obtains another cost function for the current block, associated with a current best coding option. By comparing the cost function and the another cost function, wherein the cost function or the another cost function is scaled by a complexity factor indicating computational complexity associated with the coding option, the encoder updates the another cost function and the current best coding option based on the comparison result.

FIG. 16

**Description**

TECHNICAL FIELD

The present embodiments generally relate to a method and an apparatus for rate-distortion optimization in video encoding.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

SUMMARY

According to one embodiment, a method of video encoding is presented, comprising: obtaining a first value indicating a number of bits used to encode a current block in a picture, under a coding option; obtaining a second value indicating a distortion between a reconstructed version and an original version of the current block associated with the coding option; obtaining a cost function based on the first value and the second value for the current block; obtaining another cost function for the current block, associated with a current best coding option; comparing the cost function and the another cost function, wherein the cost function or the another cost function is scaled by a complexity factor indicating computational complexity associated with the coding option; and updating the another cost function and the current best coding option based on the comparing.

According to one embodiment, an apparatus for video encoding, comprising at least one memory and one or more processors, wherein the one or more processors are configured to: obtain a first value indicating a number of bits used to encode a current block in a picture, under a coding option; obtain a second value indicating a distortion between a reconstructed version and an original version of the current block associated with the coding option; obtain a cost function based on the first value and the second value for the current block; obtain another cost function for the current block, associated with a current best coding option; compare the cost function and the another cost function, wherein the cost function or the another cost function is scaled by a complexity factor indicating computational complexity associated with the coding option; and update the another cost function and the current best coding option based on the comparing.

In one embodiment, the comparing and updating are performed for a plurality of coding options, and a coding option corresponding to the another cost function after performing for the plurality of coding options is used to encode the current block.

In one embodiment, the cost function is scaled by the complexity factor, and the another cost function is updated to the scaled cost function, responsive to that the scaled cost function is smaller than the another cost function.

In one embodiment, the another cost function is scaled by the complexity factor and the cost function to is adjusted to a large value responsive to that the cost function being larger than the scaled another cost function.

In one embodiment, whether to adjust the cost function or the another cost function is determined based on a value of the complexity factor.

In one embodiment, the complexity factor is indicative of a number of Multiply Accumulates (MACs) per pixel for encoding the current block.

In one embodiment, the complexity factor is indicative of a number of accesses to memory.

In one embodiment, the complexity factor is indicative of a number of instructions.

In one embodiment, rate distortion optimization is performed at different levels, wherein rate distortion optimization at one level depends on the complexity factor and rate distortion optimization at another level does not depend on the complexity factor.

In one embodiment, rate distortion optimization at the one level performs partitioning.

One or more embodiments also provide a computer program comprising instructions which when executed by one or more processors cause the one or more processors to perform the encoding method according to any of the embodiments described herein. One or more of the present embodiments also provide a computer readable storage medium having stored thereon instructions for encoding video data according to the methods described herein.

One or more embodiments also provide a computer readable storage medium having stored thereon video data generated according to the methods described above. One or more embodiments also provide a method and apparatus for transmitting or receiving the video data generated according to the methods described herein.

BRIEF DESCRIPTION OF THE DRAWINGS

FIG. 1 illustrates a block diagram of a system within which aspects of the present embodiments may be implemented.

FIG. 2 illustrates a block diagram of an embodiment of a video encoder.

FIG. 3 illustrates a block diagram of an embodiment of a video decoder.

FIG. 4 illustrates extraction of the gradients from the context of a given $w \times h$ block predicted via DIMD.

FIG. 5 illustrates the range of the "target intra prediction mode index" from the absolute values of G_VER and G_HOR and the signs of G_VER and G_HOR in ECM-12.0.

FIG. 6. illustrates computation of angle $\theta$ between the reference axis and the direction perpendicular to the gradient G of components G_VER and G_HOR when |G_VER| > |G_HOR|.

FIG. 7 illustrates computation of angle $\theta$ between the reference axis and the direction perpendicular to the gradient G of components G_VER and G_HOR when |G_HOR | $\geq$ |G_VER |.

FIG. 8 illustrates computation of the index of the target intra prediction mode index when |G_VER | > |G_HOR |.

FIG. 9 illustrates computation of the index of the target intra prediction mode index when |G_HOR | $\geq$ |G_VER |.

FIG. 10 illustrates decomposition into three separate regions of the context of a given $w \times h$ block predicted via DIMD.

FIGs. 11A, 11B and 11C illustrates the template of a given $w \times h$ block predicted via TIMD and the set of reference samples of this template.

FIGs. 12 and 13 illustrate the template of a given $w \times h$ block predicted via SGPM and the set of reference samples of the template, with idxSplit = 14 and idxSplit = 19, respectively.

FIG. 14 illustrates prediction of the current $w \times h$ block Y from the context X of reference samples around Y via the NN-based intra prediction mode.

FIG. 15 illustrates intra prediction mode signaling for the current $w \times h$ luma CB.

FIG. 16 illustrates a method of performing rate-distortion optimization considering the decoder complexitly, according to an embodiment.

FIG. 17 illustrates recursive CU compression with non-uniform cost weighting, according to an embodiment.

DETAILED DESCRIPTION

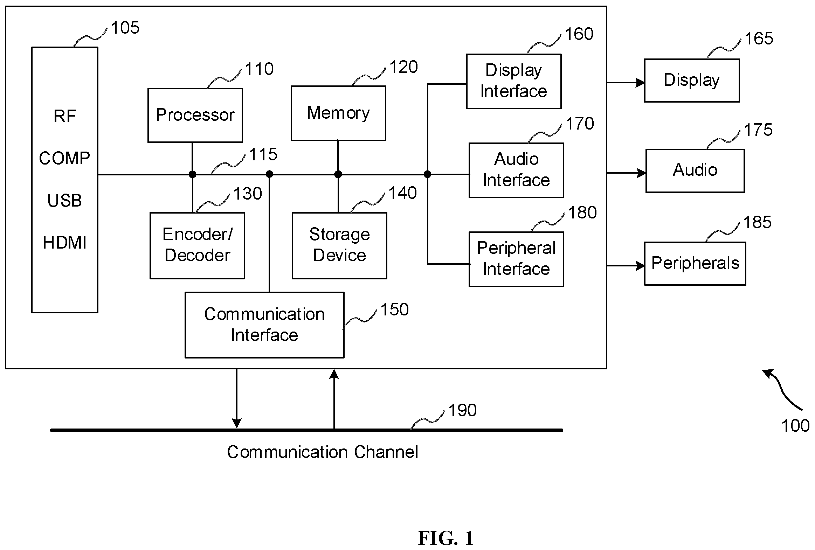

FIG. 1 illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC.

The input to the elements of system 100 may be provided through various input devices as indicated in block 105. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802. 11. The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 may provide an output signal to various output devices, including a display 165, speakers 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

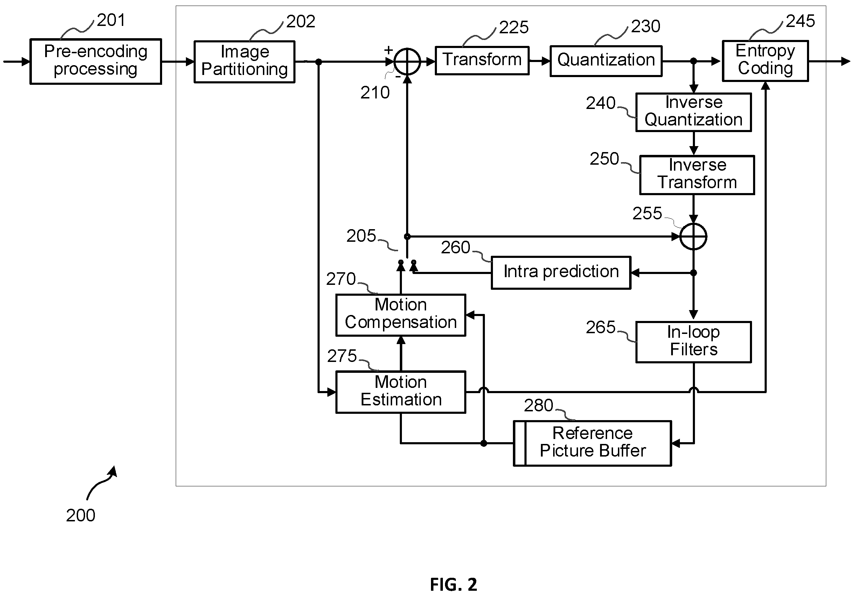

FIG. 2 illustrates an example video encoder 200, such as a VVC (Versatile Video Coding) encoder. FIG. 2 may also illustrate an encoder in which improvements are made to the VVC standard or an encoder employing technologies similar to VVC.

In the present application, the terms "reconstructed" and "decoded" may be used interchangeably, the terms "encoded" or "coded" may be used interchangeably, and the terms "image," "picture" and "frame" may be used interchangeably. Usually, but not necessarily, the term "reconstructed" is used at the encoder side while "decoded" is used at the decoder side.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing, and attached to the bitstream.

In the encoder 200, a picture is encoded by the encoder elements as described below. The picture to be encoded is partitioned (202) and processed in units of, for example, CUs (Coding Units). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements such as the picture partitioning information, are entropy coded (245) to output a bitstream. As a non-limiting example, context-based adaptive binary arithmetic coding (CABAC) can be used to encode syntax elements into the bitstream.

The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/ALF (Adaptive Loop Filter) filtering to reduce encoding artifacts. The filtered image is stored in a reference picture buffer (280).

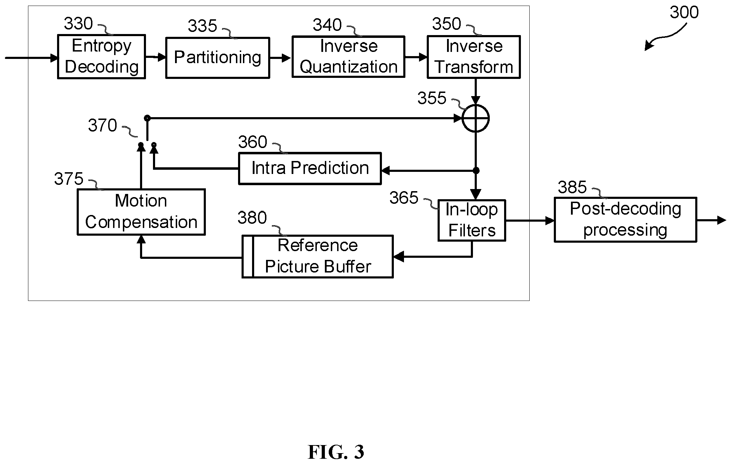

FIG. 3 illustrates a block diagram of an example video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, prediction modes, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block can be obtained (370) from intra prediction (360) or motion-compensated prediction (i.e., inter prediction) (375). In-loop filters (365) are applied to the reconstructed image. The filtered image is stored at a reference picture buffer (380). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

Decoder side Intra Mode derivation (DIMD)

Decoder Side Intra Mode Derivation (DIMD) relies on the assumption that the reconstructed pixels surrounding a given block to be predicted carry information to infer the texture directionality in this block, i.e., the intra prediction modes that most likely generate the predictions with the highest qualities. Here, the explanations apply the same way at both the encoder and decoder sides, with a focus on the prediction of a luma block via DIMD.

Derivation of intra prediction modes indices

For a given block predicted via DIMD, the derivation of the indices of the intra prediction modes that most likely generate the predictions of this block with the highest qualities is decomposed into three steps. First, gradients are extracted from a context of reconstructed pixels around this block. Then, these gradients are used to fill a Histogram of Oriented Gradients (HOG). Finally, the indices of the intra prediction modes that most likely produce the predictions with the highest qualities are derived from this HOG.

Extraction of gradients from the context

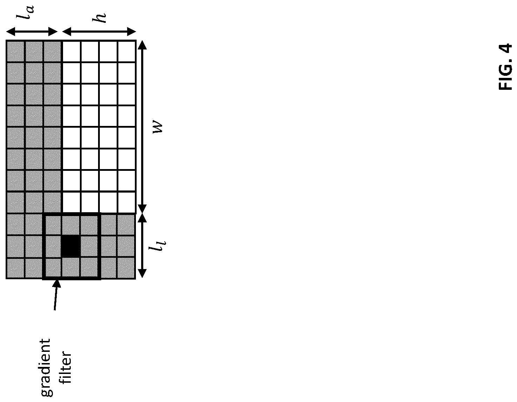

For a given block predicted via DIMD, a L-shape context of $l_a$ rows of reconstructed pixels above this block and $l_l$ columns of reconstructed pixels on the left side of this block are considered, as illustrated in FIG. 4. The L-shape context is also referred as template of this block. At each reconstructed pixel of interest in this context, a local vertical gradient and a local horizontal gradient are computed. In Enhanced Compression Model (ECM)-12.0, the local vertical and horizontal gradients are computed via $3 \times 3$ vertical and horizontal Sobel filters respectively. Moreover, in ECM-12.0, a reconstructed pixel of interest in this context refers to a reconstructed pixel at which the gradient filter does not go out of the context bounds. Therefore, in ECM-12.0, the complete extraction of gradients can be summarized by the "valid" convolution of the $3 \times 3$ vertical and horizontal Sobel filters with the context. In ECM-12.0, $l_a = l_l = 3$.

Filling of the Histogram of Oriented Gradients (HOG)

In the HOG, each bin is associated to the index of a different directional intra prediction mode. At initialization, all the HOG bins are equal to 0. For each reconstructed pixel of interest at which the local vertical gradient $G_{VER}$ and the local horizontal gradient $G_{HOR}$ are computed, a direction is derived from $G_{VER}$ and $G_{HOR}$, and the bin associated to the index of the directional intra prediction mode whose direction is the closest to the derived direction is incremented. This index can be called the "target intra prediction mode index".

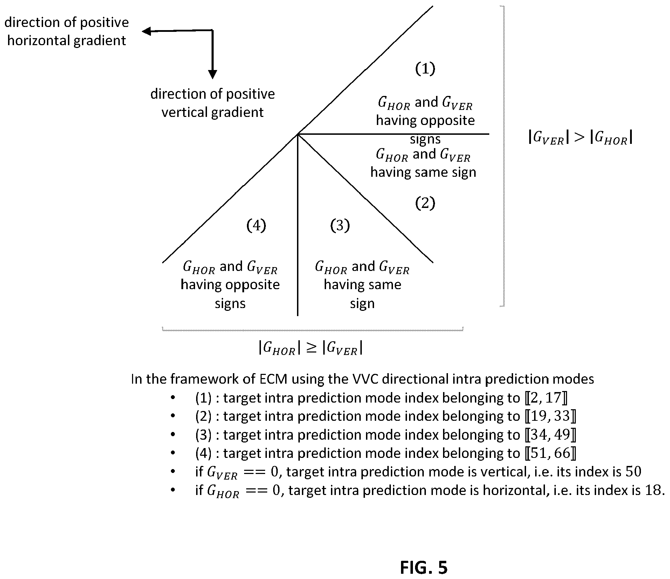

Precisely, for a given reconstructed pixel of interest, the derivation of the direction from $G_{VER}$ and $G_{HOR}$ is based on the following observation. During the prediction of a block via a directional intra prediction mode, the largest gradient in absolute value usually follows the perpendicular to the mode direction. Therefore, the direction derived from $G_{VER}$ and $G_{H0R}$ must be perpendicular to the gradient of components $G_{VER}$ and $G_{HOR}$. For instance, in ECM-12.0 using the 65 directional intra prediction modes inherited from Versatile Video Coding (VVC), considering vertical and horizontal gradient filters for which the direction of positive vertical gradient goes from top to bottom and the direction of positive horizontal gradient goes from right to left, the mapping from the absolute values of $G_{VER}$ and $G_{HOR}$ and the signs of $G_{VER}$ and $G_{HOR}$ to the range of the target intra prediction mode index is shown in FIG. 5.

Now, if $|G_{VER}| > |G_{HOR}|$, the reference axis is the horizontal axis. Otherwise, the reference axis is the vertical axis.

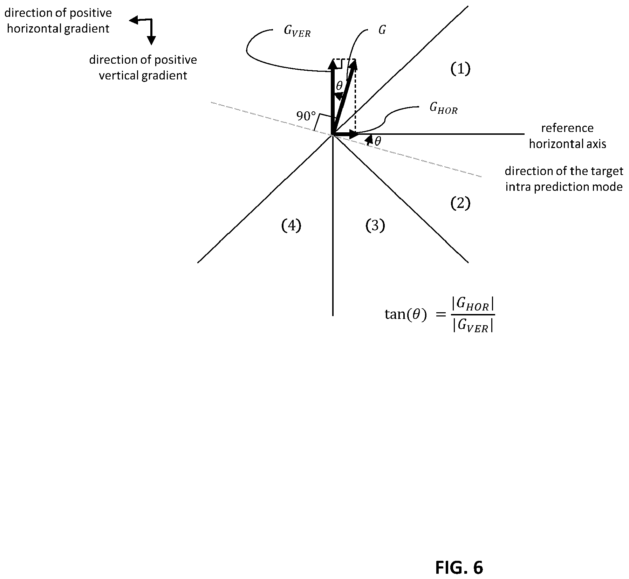

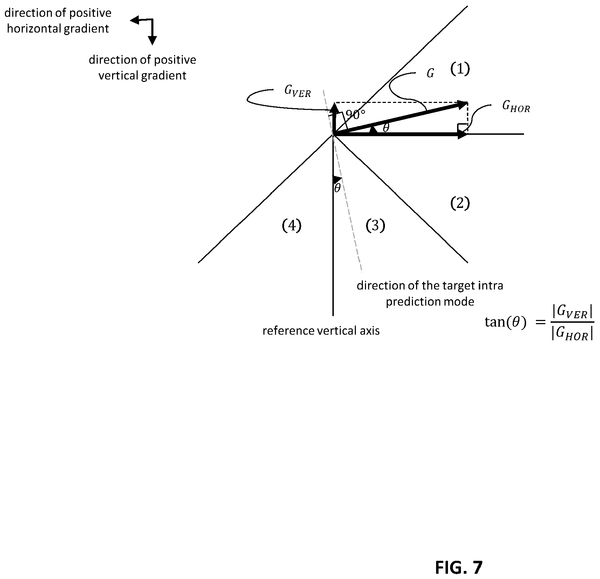

The angle $\theta$ between the reference axis and the direction being perpendicular to the gradient $G$ of components $G_{VER}$ and $G_{HOR}$ is given by $\tan(\theta) = |G_{HOR}|/|G_{VER}|$ if $|G_{VER}| > |G_{HOR}|$, $\tan(\theta) = |G_{VER}|/|G_{HOR}|$ otherwise, as illustrated in FIGs. 6 and 7.

For the current reconstructed pixel of interest at which the local vertical gradient $G_{VER}$ and the local horizontal gradient $G_{HOR}$ are computed, for the range of intra prediction mode indices found as in FIG. 5, it is now possible to find the index of the intra prediction mode whose angle with respect to the reference axis is the closest to $\theta$. The bin associated to the index of the found "target intra prediction mode" is then incremented by $|G_{HOR}| + |G_{VER}|$. Note that, for the current reconstructed pixel of interest, if $G_{HOR} = G_{VER} = 0$, no HOG bin is incremented.

Angle discretization

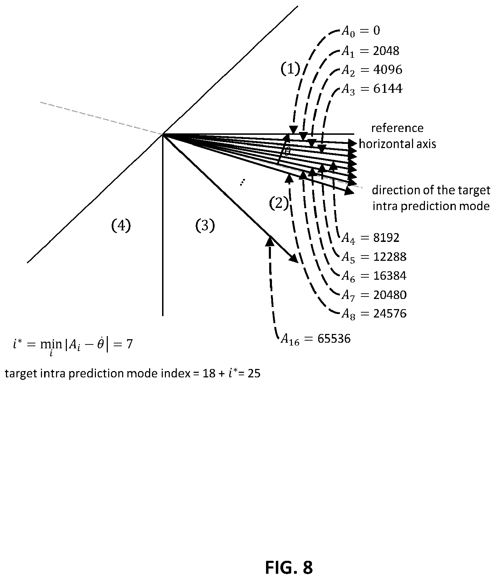

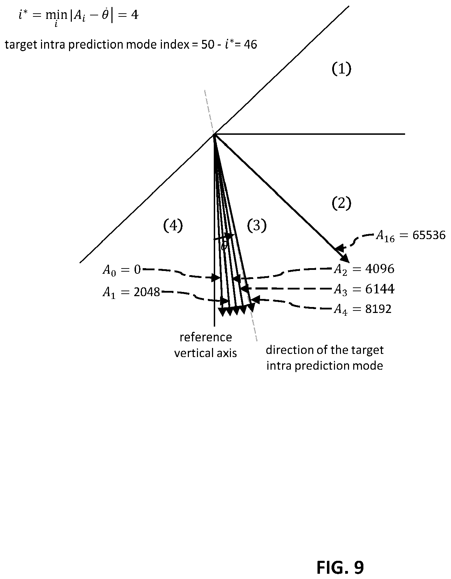

For a given reconstructed pixel at which the local vertical gradient $G_{VER}$ and the local horizontal gradient $G_{HOR}$ are computed, for the found range of the target intra prediction mode index, as illustrated in FIG. 5, the angle $\theta$ is not directly compared to the angle of each intra prediction mode with respect to the reference axis in this range. Indeed, the absolute angle of each intra prediction mode with respect to its reference axis is stored in a scaled integer form. Therefore, $\dot{\theta} =$ floor$(\tan(\theta) \times (1 \ll 16))$ is compared to the scaled integer form $A_i$ of the angle of the directional intra prediction mode of index $i$ from the reference axis, $i \in [|0, 16|]$. floor denotes the floor operation, operation that for an input x as a result of floor(x) returns the greatest integer less than or equal to x. Then, the absolute shift $i^*$ from the index of the reference axis to the

$$i^* = \min_i | A_i - \dot{\theta} |$$

index of the target intra prediction mode is . The target intra prediction mode index is finally equal to the index of the reference axis shifted by $i^*$. In the conditions of FIG. 6, FIG. 8 illustrates the computation of the index of the target intra prediction mode using the above-mentioned discretization of $\theta$. In the conditions of FIG. 7, FIG. 9 presents the computation of the index of the target intra prediction mode using the above-mentioned discretization of $\theta$.

Derivation of intra prediction modes indices from the resulting HOG

In ECM-12.0, once the filling of the HOG is completed, the 5 bins with the largest magnitudes correspond to the indices of the 5 directional intra prediction modes that most likely yield the 5 predictions with the highest qualities.

Prediction

For a given block predicted via DIMD, following the derivation of the indices of these 5 directional intra prediction modes, the prediction of this block is computed by blending the 6 predictions of this block via these 5 directional intra prediction modes and PLANAR. The blending weights depend on the relative magnitudes of the 5 HOG bins with the largest magnitudes.

Location dependent DIMD

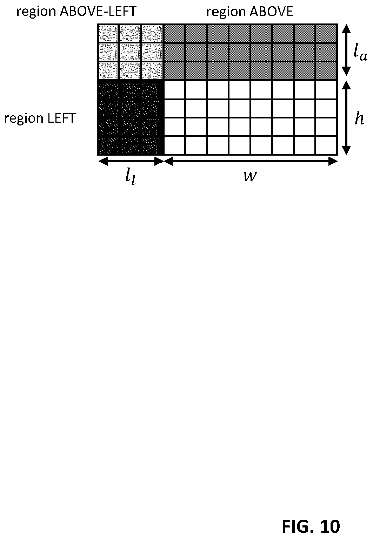

In ECM-12.0, the regular DIMD is combined with a location dependent DIMD. For a given block predicted via DIMD, in the location dependent DIMD, when deriving an intra prediction mode index, it is determined whether this derivation is mostly influenced by the portion of the context above this block or that on the left side of this block. Precisely, for a given block predicted via DIMD, the context of this block is divided into 3 separate regions, as illustrated in FIG. 10. For the 3 regions ABOVE, LEFT, and ABOVE-LEFT, three HOGs $H_{above}$, $H_{left}$, and $H_{aboveLeft}$ respectively are filled. $H_{full} = H_{above} + H_{left} + H_{aboveLeft}$. By denoting idxModeDimd$_i$ the index of the $i^{th}$ directional intra prediction mode derived by DIMD,

$$i \in [\![0, 5]\!]$$

, $H_{above}$ and $H_{left}$ determine whether idxModeDimd$_i$ mainly depend on a specific context region ABOVE or LEFT as

if $H_{left}[\text{idxModeDimd}_i] < H_{full}[\text{idxModeDimd}_i]/3$:

    dimdLocDep$_i = 1$, i.e., idxModeDimd$_i$ mainly depends on region ABOVE

else if $H_{above}[\text{idxModeDimd}_i] < H_{full}[\text{idxModeDimd}_i]/3$:

    dimdLocDep$_i = 2$, i.e., idxModeDimd$_i$ mainly depends on region LEFT

else:

$$dimdLocDep_i = 0, \text{ i.e., } idxModeDimd_i \text{ is not location dependent.}$$

Finally, for $i \in [\![0, 5]\!]$, $dimdLocDep_i$ defines how the prediction of this block via the intra prediction mode of index $idxModeDimd_i$ is blended with the 5 other predictions, forming the final prediction of this block. For instance, if $dimdLocDep_0 = 1$, the prediction of this block via the intra prediction mode of index $idxModeDimd_0$ is blended by giving relatively larger weights to the predicted samples closer to the top border of this block.

Signaling of DIMD

In ECM-12.0, for a given luma Coding Block (CB), DIMD is signaled via a DIMD flag, placed before the Template Matching Prediction (TMP) flag in the decision tree of the signaling of the intra prediction mode selected to predict this luma CB.

Template-based Intra Mode Derivation (TIMD)

Template-based Intra Mode Derivation (TIMD) relies on the assumption that the intra prediction modes generating the predictions of a template of reconstructed pixels around a given block to be predicted with the highest qualities most likely yield the predictions of this block with the highest qualities. Note the explanations apply the same way at both the encoder and decoder sides, with a focus on the prediction of a luma block via TIMD because, in ECM-12.0, TIMD applies to luma only.

Derivation of intra prediction modes indices

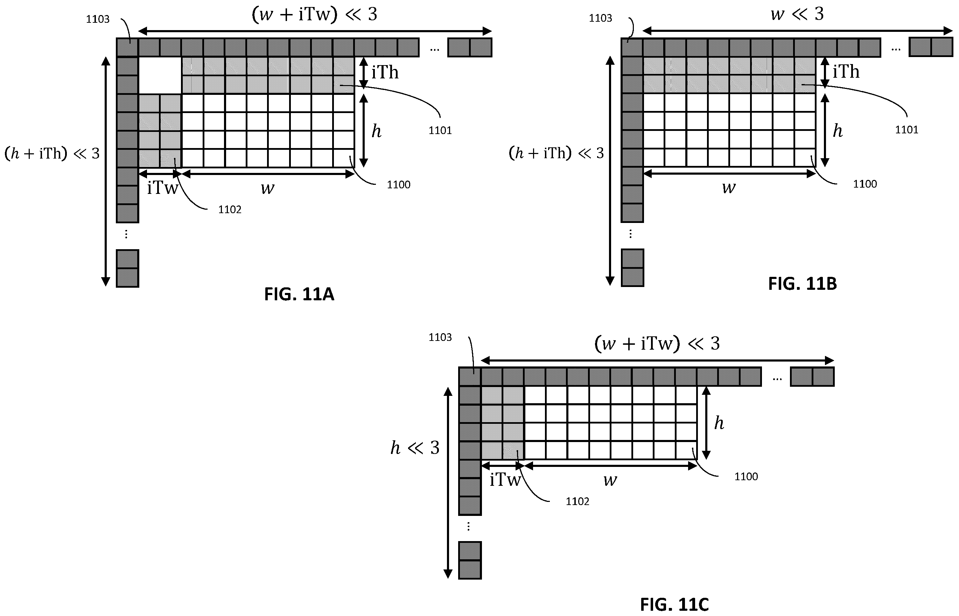

For a given block predicted via TIMD, the derivation of intra prediction modes indices consists in 3 passes of tests of modes on the template of reconstructed pixels surrounding this block in terms of prediction Sum of Absolute Transform Differences (SATD). In ECM-12.0, as illustrated in FIG. 11, iTw = 2 if w ≤ 8; otherwise, iTw = 4. iTh = 2 if h ≤ 8; otherwise, iTh = 4.

At the first pass, for a given $w \times h$ block (1100), as illustrated in FIG. 11A, for each index of intra prediction mode in the list $\mathcal{L}$ being the Most Probable Mode (MPM) list of (1100) supplemented with default indices in {DC_IDX, HOR_IDX, VER_IDX} if these indices do not already exist in this MPM list, this mode computes a prediction of the template (1101, 1102) of reconstructed pixels surrounding from the set of reference samples (1103) of (1101, 1102), and the SATD between (1101, 1102) and its prediction is calculated. The two intra prediction modes with minimum template prediction SATDs are retained. Note that, in TIMD, the set of directional intra prediction modes is extended from 65 to 129. Thus, before testing a directional intra prediction mode of index idxDir on (1101, 1102) in terms of prediction SATD, idxDir must be re-mapped as idxDir = (idxDir « 1) - 2.

At the second pass, for several extended wide-angle intra prediction modes, each of them computes a prediction of (1101, 1102) from (1103), and the SATD between (1101, 1102) and its prediction is calculated. Following this, the two intra prediction modes with minimum template prediction SATDs may be updated.

At the third pass, for each of the two intra prediction modes retained by the second pass, if this mode is neither PLANAR nor DC, its two closest directional intra prediction modes are also tested on (1101, 1102) in terms of prediction SATD. Following this, the two intra prediction modes with minimum template prediction SATDs may be updated.

Finally, a blending condition is defined. Let timdIsBlend denote the flag indicating whether the TIMD blending applies. Let $satd_0$ and $satd_1$ be the smallest and second smallest prediction SATDs respectively.

$$timdIsBlend = satd_1 < 2satd_0.$$

Note that the above description assumes that the template of the given $w \times h$ block does not go out of the current frame bounds. In the case where the template portion on the left side of this block goes out of the current frame bounds, FIG. 11A becomes FIG. 11B. In the case where the template portion above this block goes out of the current frame bounds, FIG. 11A becomes FIG. 11C.

Prediction

If timdIsBlend is false, the final prediction of the current block from its set of reference samples is performed using the first retained intra prediction mode. Otherwise, the final prediction of the current block arises from the blending of the two predictions of this block via the first and second retained intra prediction modes respectively, the blending weights depending on $satd_0$ and $satd_1$.

Non-angular and location dependent TIMD

From ECM-11.0 to ECM-12.0, a non-angular and location dependent TIMD has appeared.

Non-angular TIMD

During the derivation of intra prediction modes indices, before the first pass, PLANAR and DC are tested on the template of reconstructed pixels surrounding the given block in terms of prediction SATD. The index $idx_{NA} \in \{$PLANAR_IDX, DC_IDX$\}$ of the non-angular intra prediction mode with the smallest prediction SATD $satd_{NA}$ is saved. Then, after the third pass, if timdIsBlend is true and $idx_{NA}$ is different from the indices of the two retained intra prediction modes and $satd_{NA} < 1.5\ satd_0$, during the generation of the final prediction of the given block, this final prediction will result from the blending of the two predictions of this block via the first and second retained intra prediction modes respectively and the prediction of this block via the intra prediction mode of index $idx_{NA}$. The blending weights depend on $satd_0$, $satd_1$, and $satd_{NA}$.

Location dependent TIMD

For a given $w \times h$ block (1100) predicted via TIMD whose template (1101, 1102) does not go out of the current frame bounds, the location-dependency of the $i^{th}$ retained intra prediction mode, $i \in [\![0, 2]\!]$, is determined from a ratio of normalized prediction SATD $\overline{satd}_{i,A}$ on the template portion (1101) above (1100) and normalized prediction SATD $\overline{satd}_{i,L}$ on the template portion (1102) on the left side of (1100). The 1$^{st}$ and 2$^{nd}$ retained intra prediction modes correspond to the two retained intra prediction modes having prediction SATDs $satd_0$ and $satd_1$ respectively. The 3$^{rd}$ retained intra prediction mode corresponds to the optionally retained non-angular intra prediction mode of index $idx_{NA}$ and prediction SATD $satd_{NA}$.

$$\text{if } \overline{satd}_{i,A} < (1/2)\overline{satd}_{i,L}:$$
$$\text{timdLocDep}_i = 1$$
$$\text{else if } \overline{satd}_{i,L} < (1/2)\overline{satd}_{i,A}:$$
$$\text{timdLocDep}_i = 2$$
$$\text{else:}$$
$$\text{timdLocDep}_i = 0.$$

where:

- timdLocDep$_i$ denotes the location dependent parameter value associated with retained intra prediction mode $i$, $i \in [\![0, 2]\!]$. A value of 0 indicates no location-dependency. A value of 1 indicates vertical location dependency. A value of 2 indicates horizontal location dependency.
- $satd_{i,A} = satd_{i,A}/(w \times iTh)$ where $satd_{i,A}$ denotes the SATD between the template portion (1101) above (1100) and its prediction via the $i^{th}$ retained intra prediction mode.
- $\overline{satd}_{i,L} = satd_{i,L}/(h \times iTw)$ where $satd_{i,L}$ denotes the SATD between the template portion (1102) on the left side of (1100) and its prediction via the $i^{th}$ retained intra prediction mode.

In the case where the template portion on the left side of the given $w \times h$ block goes out of the current frame bounds, timdLocDep$_i = 1$, $\forall i \in [\![0, 2]\!]$. In the case where the template portion above the given block goes out of the current frame bounds, timdLocDep$_i$ = 2, $\forall i \in [\![0, 2]\!]$ .

Finally, if timdIsBlend is true, for $i \in [\![0, 2]\!]$ , timdLocDep$_i$ defines how the prediction of this block via the $i^{\text{th}}$ retained intra prediction mode is blended with the other prediction(s), forming the final prediction of this block. For instance, assuming that timdIsBlend is true, if timdLocDep$_0$ = 1, the prediction of this block via the $0^{\text{th}}$ retained intra prediction mode is blended by using relatively larger weights for the predicted samples closer to the top border of this block. For instance, assuming that timdIsBlend is true, if timdLocDep$_0$ = 2, the prediction of this block via the $0^{\text{th}}$ retained intra prediction mode is blended by giving relatively larger weights to predicted samples closer to the left border of this block.

Signaling of TIMD

In ECM-12.0, for a given luma CB, TIMD is signaled via a TIMD flag, placed before the Extrapolation-based Intra Prediction (EIP) flag and after the Matrix-based Intra Prediction (MIP) flag in the decision tree of the signaling of the intra prediction mode selected to predict this luma CB.

Spatial Geometric Partition Mode (SGPM)

A given block predicted via Spatial Geometric Partition Mode (SGPM) is split into two partitions along a frontier. The prediction of this block is produced by blending the predictions of this block via two different intra prediction modes. The blending weights depend on this frontier. A list of 16 triplets of a partition mode index and two intra prediction modes indices is derived via tests on a template of this block. At the encoder side, if SGPM is selected to predict this block, the index in this list of the selected triplet is signaled to the decoder. Note the details apply the same way at both the encoder and decoder sides, with a focus on the prediction of a luma block via SGPM as, in ECM-12.0, SGPM applies to luma only.

Deriving the list of triplets of a partition mode index and two intra prediction modes indices

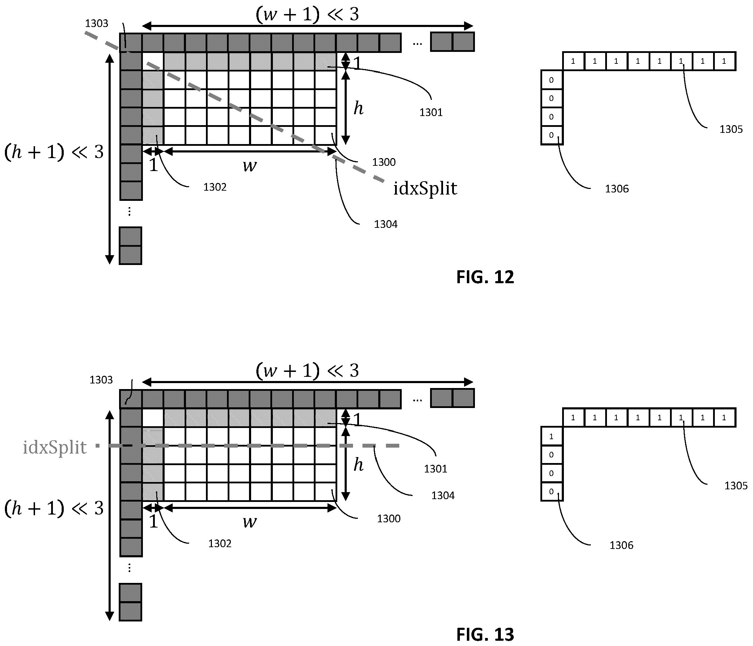

For a given $w \times h$ block (1300) predicted via SGPM, as illustrated in FIG. 12 and FIG. 13, the derivation of the list of 16 triplets of a partition mode index and two intra prediction modes indices go through 3 steps. The block is split into two partitions via the partition mode of index idxSplit = 14 in FIG. 12 and idxSplit = 19 in FIG. 13.

At the first step, for each index $\text{idxSplit} \in [\![0, 63]\!]$ of partition mode, for each index $\text{idxPart} \in [\![0, 1]\!]$ of partition resulting from the split of this block using the partition mode of index idxSplit, a list $\mathscr{L}_{\text{idxSplit,idxPart}}$ of 3 indices of intra prediction modes to be tested on a template of this block is constructed. By scanning candidate intra prediction modes successively, a candidate mode index is added to $\mathscr{L}_{\text{idxSplit,idxPart}}$ if it does not already exist in $\mathscr{L}_{\text{idxSplit,idxPart}}$. The candidate intra modes are two intra prediction modes derived via a modified TIMD applied to this block, the intra prediction mode whose direction is parallel to the frontier associated to idxSplit, the first intra prediction mode derived via DIMD applied to this block, and intra prediction modes selected to predict neighboring blocks, the choice of the neighboring blocks depending on idxSplit and idxPart.

At the second step, for each index idxMode of intra prediction mode inside $\left\{ \mathscr{L}_{\text{idxSplit,idxPart}} \right\}_{\text{idxSplit} \in [\![0,63]\!], \text{idxPart} \in [\![0,1]\!]}$, this mode computes a prediction of the template (1301, 1302) of reconstructed pixels surrounding (1300) from the set of reference samples (1303) of (1301, 1302). Then, the Sum of Absolute Differences (SAD) sad$_{\text{idxMode}}$ between (1301, 1302) and its prediction is calculated. Besides, for $\text{idxSplit} \in [\![0, 63]\!]$, the SAD sad$_{\text{idxSplit,idxMode}}$ between the portion (1301, 1302) on the right side of the frontier (1304) associated to idxSplit and its prediction is calculated.

At the third step, for $\text{idxSplit} \in [\![0, 63]\!]$, for $(i, j) \in [\![0, 2]\!]^2$, $i \neq j$, the SAD between (1301, 1302) and its prediction via SGPM involving the partition mode of index idxSplit and the two intra prediction modes of indices $\mathscr{L}_{\text{idxSplit,0}}[i]$ and $\mathscr{L}_{\text{idxSplit,1}}[j]$ is computed as $\text{sad}_{\text{idxSplit}, \mathscr{L}_{\text{idxSplit,0}}[i]} + \text{sad}_{\mathscr{L}_{\text{idxSplit,1}}[j]} - \text{sad}_{\text{idxSplit}, \mathscr{L}_{\text{idxSplit,1}}[j]}$. The list $\mathbb{L}$ of 16 triplets is filled in ascending order of the latter prediction SAD.

Note that, in ECM-12.0, at the second step, the computation of $\text{sad}_{\text{idxSplit,idxMode}}$ is done by multiplying elementwise the absolute difference between (1301, 1302) and its prediction with the binary mask (1305, 1306) and summing up the result of this elementwise multiplication. The binary mask (1305, 1306) depends on idxSplit.

Prediction

For a given $w \times h$ block predicted via SGPM, $$\mathbb{L}[\text{idxSgpm}] = \{\text{idxSplit}, \text{idxModeSgpm0}, \text{idxModeSgpm1}\}$$ where idxSgpm denotes the index in IL of the triplet selected for prediction. The final prediction predFinal of this block can be written, for $x \in [\![0, w-1]\!]$ and $y \in [\![0, h-1]\!]$,

$$\text{predFinal}(x, y) =$$

$$\text{clip}\Big(\big(w(x,y) * \text{pred0}(x,y) + \big(32 - w(x,y)\big) * \text{pred0}(x,y) + 16\big) \gg 5, 0, 1023\Big)$$

where pred0 and pred1 denote the predictions of this block via the intra prediction modes of indices idxModeSgpm0 and idxModeSgpm1 respectively. $w(x,y)$ denotes the weight at position $(x,y)$ inside the predicted block. $w(x,y)$ depends on idxSplit. clip( . , 0, 1023) clips its input scalar to [0, 1023].

Signaling of SGPM

In ECM-12.0, for a given luma CB, SGPM is signaled via a SGPM flag, placed before the Template-based Multiple Reference Lines (TMRL) flag and after the EIP flag in the decision tree of the signaling of the intra prediction mode selected to predict this luma CB. If this SGPM flag is true, i.e., SGPM is selected to predict this luma CB, idxSgpm is signaled via a truncated binary code of length 16.

Template-based Multiple Reference Line (TMRL)

Deriving the list of pairs of an extended reference line index and a mode index

For a given block predicted via TMRL, each allowed pair of an extended reference line and an intra prediction mode is tested on a template of this block in terms of prediction SAD. An index of extended reference line belongs to {1, 3, 5, 7, 12}. An index of intra prediction mode belongs to [1,131] as TMRL involves the extended set of 129 directional intra prediction modes but excludes PLANAR. The list $\overline{\mathbb{L}}$ of 20 pairs of an extended reference line index and an intra prediction mode index is filled in ascending order of this prediction SAD.

Prediction

For a given block predicted via TMRL, the pair of an extended reference line and an intra prediction mode of indices $\overline{\mathbb{L}}[\text{idxTmrl}]$ are used to predict this block. idxTmrl denotes the index in $\overline{\mathbb{L}}$ of the selected pair.

Signaling of TMRL

In ECM-12.0, for a given luma CB, TMRL is signaled via a TMRL flag, placed after the SGPM flag in the decision tree of the signaling of the intra prediction mode selected to predict this luma CB. If this TMRL flag is true, idxTmrl is signaled via a truncated Golomb-Rice code with divisor 4.

Neural network-based intra prediction

In this document, the broadest definition of the neural network-based intra prediction is used. That is, "neural network-based intra prediction" refers to an intra prediction tool in which a series of one or several layers, a layer containing an affine (or linear) transformation optionally followed by a non-linear function, computes a prediction of the current block from already reconstructed pixels around the current block. Under this definition, the neural network-based intra prediction, MIP, and the matrix-based intra prediction are three examples of "neural network-based intra prediction".

Neural network (NN)-based intra prediction

In the hybrid block-based video codec testing neural networks for video coding on top of VVC, called Neural Network Video Coding (NNVC), currently NNVC-8.0, the neural network (NN)-based intra prediction (NNIP) works as summarized below.

Neural network inference

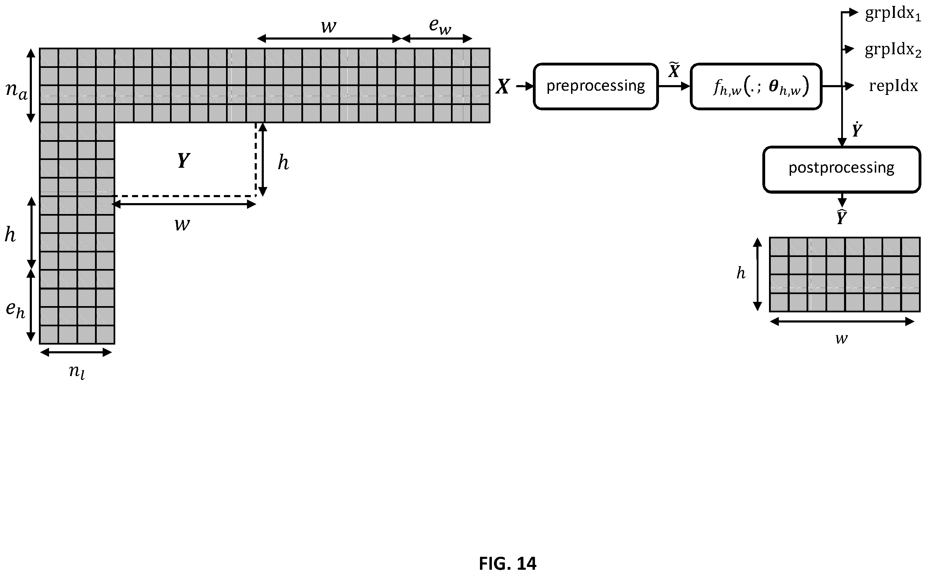

The NN-based intra prediction mode contains 7 NNs, each predicting blocks of a different size in $\{4 \times 4, 8 \times 4, 16 \times 4, 32 \times 4, 8 \times 8, 16 \times 8, 16 \times 16\}$. The NN predicting blocks of size $w \times h$ is denoted $f_{hw}(. ; \theta_{h,w})$ where $\theta_{h,w}$ denotes the neural network parameters. For a given $w \times h$ block $Y$, $f_{h,w}(. ; \theta_{h,w})$ takes a preprocessed version $\tilde{X}$ of the context $X$ made of $n_a$ rows of $n_l + 2w + e_w$ reference samples located above this block and $n_l$ columns of $2h + e_h$ reference samples on its left side to provide $\dot{Y}$. The application of a postprocessing to $\dot{Y}$ yields a prediction $\hat{Y}$ of $Y$, as illustrated in FIG. 14. Here, w=8, h=4. Here, $n_a = n_l = e_h = e_w = 4$. In addition, $f_{h,w}(. ; \theta_{h,w})$ outputs two indices grpIdx$_1$ and grpIdx$_2$, where grpIdx$_i$ denotes the index characterizing the Low Frequency Non-Separable Transform (LFNST) set index and whether the primary transform coefficients resulting from the application of the Discrete Cosine Transform (DCT)-2 horizontally and the DCT-2 vertically to the residue of the neural network prediction are transposed when lfnstIdx = $i$, $i \in \{1, 2\}$. lfnstIdx denotes the LFNST index. lfnstIdx = 0 indicates that LFNST is not used for coding $Y$. lfnstIdx $\in \{1, 2\}$ means that LFNST is used for coding $Y$, involving the kernel of index lfnstIdx - 1 inside the LFNST set of given index. Furthermore, $f_{h,w}(. ; \theta_{h,w})$ gives the index

$$\text{repIdx} \in [\![0, 66]\!]$$ of the VVC intra prediction mode (PLANAR or DC or directional intra prediction mode) whose prediction of $Y$ from the reference samples surrounding $Y$ best represents $\hat{Y}$.

Signaling

Signaling in luma

For the current $w \times h$ luma CB whose top-left pixel is at position $(x, y)$ in the current luma channel, the intra prediction mode signaling in luma is split into two cases.

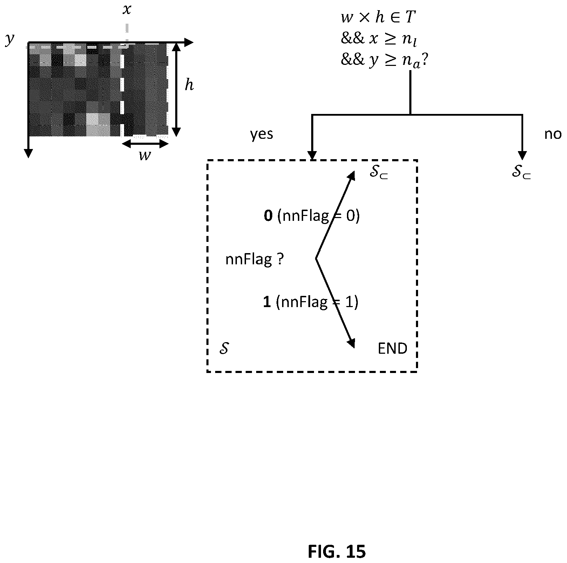

- If $w \times h \in T$, nnFlag appears in the intra prediction mode signaling in luma. nnFlag = 1 means that the NN-based intra prediction mode is selected to predict the current luma CB. nnFlag = 0 means that the NN-based intra prediction mode is not selected to predict the current luma CB, then the regular intra prediction mode signaling in luma, denoted $S_\subset$, applies, as illustrated in an example in FIG. 15, where the coordinates of the pixel at the top-left of this CB are (y,x), and h = 8, w = 4, x = 8, and y = 0.
- Otherwise, the regular intra prediction mode signaling in luma $S_\subset$ applies.

$T = \{4 \times 4, 4 \times 8, 8 \times 4, 4 \times 16, 16 \times 4, 4 \times 32, 32 \times 4, 8 \times 8, 8 \times 16, 16 \times 8, 8 \times 32, 32 \times 8, 16 \times 16, 16 \times 32, 32 \times 16, 32 \times 32, 64 \times 64\}$. Note that, in the case "$w \times h \in T$ && nnFlag = 1", if the context of the current luma CB goes out of the bounds of the current luma channel, i.e., $x < n_l \parallel y < n_a$, the NN-based intra prediction is replaced by PLANAR.

Signaling in chroma

For the current pair of $w \times h$ chroma CBs having top-left pixel at position $(x, y)$ in the current pair of chroma channels, the intra prediction mode signaling in chroma is split into two cases.

- If the luma CB collocated with this pair of chroma CBs is predicted by the NN-based intra prediction mode:

    ∘ If $w \times h \in T$, the Direct Mode (DM) becomes the NN-based intra prediction mode.
    ∘ Otherwise, the DM is set to PLANAR.

- Otherwise:

    ∘ If $w \times h \in T$, nnFlagChroma appears in the intra prediction mode signaling in chroma. nnFlagChroma is placed before the DM flag in the decision tree of the intra prediction mode signaling in chroma. nnFlagChroma = 1 means that the NN-based intra prediction mode is selected to predict the current pair of chroma CBs and END.

nnFlagChroma = 0 means that the NN-based intra prediction mode is not selected to predict the current pair of chroma CBs, then the regular intra prediction mode signaling in chroma resumes from the DM flag.
∘ Otherwise, the regular intra prediction mode signaling in chroma applies.

Note that, in the case where "$w \times h \in T$ and the DM becomes the NN based intra mode" and the case where "$w \times h \in T$ && nnFlagChroma = 1", if the context of the current chroma CB goes out of the bounds of the current chroma channel, i.e. $x < n_l \| y < n_a$, the NN-based intra prediction is replaced by PLANAR.

Transformation of the context and neural network prediction

For a given $w \times h$ block, if $w \times h \in T$, it is possible that the NN-based intra prediction mode must predict this block, but the NN-based intra prediction mode does not contain $f_{h,w}(\,.\,;\theta_{h,w})$. In this case, the context of the current block can be down-sampled vertically by a factor $\delta$ and/or down-sampled horizontally by a factor $\gamma$ and/or transposed before the step called "preprocessing" in FIG. 14. Then, the prediction of the current block can be transposed and/or up-sampled vertically by the factor $\delta$ and/or up-sampled horizontally by the factor $\gamma$ after the step called "postprocessing" in FIG. 14. The transposition of the context of the current block and the prediction, $\delta$, and $\gamma$ are chosen so that a neural network belonging to the NN-based intra prediction mode is used for prediction, as shown in Table 1.

Table 1: decision of transposing the context of the current $\boldsymbol{w} \times \boldsymbol{h}$ block to be predicted and the prediction of this block, the value of $\gamma$, and the value of $\delta$, and the neural network belonging to the NN-based intra prediction mode used for prediction for each $\boldsymbol{w} \times \boldsymbol{h} \in \boldsymbol{T}$.

| $w \times h$ | transposition | $\gamma$ | $\delta$ | NN used for prediction |
|---|---|---|---|---|
| $4 \times 4$ | no | 1 | 1 | $f_{4,4}(.\,,\theta_{4,4})$ |
| $8 \times 4$ | no | 1 | 1 | $f_{4,8}(.\,,\theta_{4,8})$ |
| $4 \times 8$ | yes | 1 | 1 | $f_{4,8}(.\,,\theta_{4,8})$ |
| $16 \times 4$ | no | 1 | 1 | $f_{4,16}(.\,\theta_{4,16})$ |
| $4 \times 16$ | yes | 1 | 1 | $f_{4,16}(.\,,\theta_{4,16})$ |
| $32 \times 4$ | no | 1 | 1 | $f_{4,32}(.\,,\theta_{4,32})$ |
| $4 \times 32$ | yes | 1 | 1 | $f_{4,32}(.\,,\theta_{4,32})$ |
| $8 \times 8$ | no | 1 | 1 | $f_{8,8}(.\,,\theta_{8,8})$ |
| $16 \times 8$ | no | 1 | 1 | $f_{8,16}(.\,,\theta_{8,16})$ |
| $8 \times 16$ | yes | 1 | 1 | $f_{8,16}(.\,,\theta_{8,16})$ |
| $32 \times 8$ | no | 2 | 1 | $f_{8,16}(.\,,\theta_{8,16})$ |
| $8 \times 32$ | yes | 1 | 2 | $f_{8,16}(.\,,\theta_{8,16})$ |
| $16 \times 16$ | no | 1 | 1 | $f_{16,16}(.\,,\theta_{16,16})$ |
| $32 \times 16$ | no | 2 | 1 | $f_{16,16}(.\,,\theta_{16,16})$ |
| $16 \times 32$ | no | 1 | 2 | $f_{16,16}(.\,,\theta_{16,16})$ |
| $32 \times 32$ | no | 2 | 2 | $f_{16,16}(.\,,\theta_{16,16})$ |
| $64 \times 64$ | no | 4 | 4 | $f_{16,16}(.\,,\theta_{16,16})$ |

Matrix-based intra prediction replacing conventional intra prediction modes in ECM-12.0

For a given block to be predicted, weights are multiplied by the reference samples inside L-shape causal neighborhood template around this given block to compute the prediction samples, replacing conventional intra prediction. This L-shape causal neighborhood template is identical to the one on the left-hand side of FIG. 14 when $n_a = n_l = 4$ and $e_h =$

$e_w = 0$. For a given $w \times h$ block to be predicted, denoting the vector of $\overset{.}{k} \in \mathbb{N}^*$ reference samples in the L-shape causal neighborhood template as $\tilde{X}$ and the matrix of $khw$ weights as $W$, the vector $Y$ of $hw$ predicted samples can be computed via the following vector-matrix multiplication.

$$\dot{Y} = \tilde{X} W$$

The replacement of conventional intra prediction modes by matrix-based intra prediction is only enabled for block sizes of $w \leq 16$ and $h \leq 16$, and for modes of indices 0, 1, and $2 + 4 * i$ where $i = \{0, 1, 2, ... , 16\}$, i.e., every 4 modes. The term "conventional" intra prediction mode refers to an intra prediction mode in {PLANAR, DC, 65 directional intra prediction modes} inherited from VVC.

Note that, when enabled, as conventional intra prediction modes are replaced by matrix-based intra prediction, no extra signaling is needed.

Rate distortion Optimization

Rate-Distortion Optimization (RDO) aims at choosing the best coding option amongst all coding options $P = \{p0, p1, ..., pn\}$ for every block, where $pi$ is a coding option and $pi$ can also be referred to as a coding mode, associated with a parameter set for the coding option. A coding option indicates the way of encoding, for example, it can be at least one of an intra prediction tool such as NNIP or TIMD, a transform type such as LFNST index, the partitioning mode (split the mode into smaller sub-blocks or code without splitting). For each tested candidate mode $p$, the prediction is computed, then residual is computed and transformed using the candidate transform mode. Then, a distortion (Dist) between the reconstructed block for the candidate coding mode and the original input block is computed. The number of bits (Bits) is also computed to evaluate the bitrate of the candidate mode and residual coding. The Sum of Absolute Differences (SAD) is commonly used to compute Dist. A simulation of encoding is done using for example a binary encoding such as the CABAC (Context Adaptive Binary Arithmetic Coding) Engine (for VTM and ECM) and the number of bits is extracted.

Finally, a cost for the given parameter set $p$ is evaluated as a joint optimization of Bits and Dist, for example using a Lagrange multiplicator ($\lambda$) as in the RDO equation below:

$$Cost(p) = Dist(p) + \lambda * Bits(p)$$

The chosen coding mode will be the one minimizing the *Cost.*

The RDO Equation can be equivalently written as:

$$Cost'(p) = \lambda' * Dist(p) + Bits(p)$$

The chosen coding mode will then be the one minimizing the *Cost'*:

$$\hat{p} = \underset{p \in P}{\operatorname{argmin}}(\lambda' * Dist(p) + Bits(p))$$

Decoder complexity control

Tools complexity assessment

Tools complexity assessment is usually done by performing encodings for several target bitrates or quantization points, for an anchor configuration, and for several configurations involving tools enabling or disabling. The encoding time, decoding time, resulting bitstream quality, and bitrate are measured. The results are for each configuration/tool, a compression performance in terms of Bjontegaard delta rates (BD) for Luma (Y), Chroma (U, V) or a combination (YUV), an encoding complexity measure given by the encoding time (EncT) and a decoding complexity (DecT). Table 2 shows example results for The Joint Exploratory Model 1.0 (JEM-1.0), a software used for exploratory purpose during the early phase of the VVC development.

Table 2 - Coding efficiency (BD-Rate) and complexity (runtime increase) results when enabling individual tools in the JEM-1.0 software.

| Tools | BD(YUV) | EncT | DecT |
|---|---|---|---|
| ALF | -4.06% | 120% | 161% |
| SUB_PU_TMVP | -1.79% | 121% | 115% |
| OBMC | -2.30% | 116% | 127% |

(continued)

| Tools | BD(YUV) | EncT | DecT |
|---|---|---|---|
| EMT | -1.78% | 136% | 108% |
| T64 | -0.54% | 107% | 113% |
| LARGE_CTU | -1.13% | 95% | 111% |
| LMCHROMA | -0.19% | 104% | 105% |
| IMV | -0.92% | 117% | 104% |
| FRUC_MERGE | -4.50% | 166% | 283% |
| IC | -0.29% | 114% | 105% |
| INTRA_4TAP_FILTER | -0.25% | 102% | 104% |
| INTRA_BOUNDRY_FILTER | -0.17% | 102% | 104% |
| INTRA_65ANG_MODES | -0.18% | 103% | 104% |
| CTX_RESIDUALCODING | -0.45% | 109% | 106% |
| BAC_ADAPT_WDOW | -0.06% | 105% | 106% |
| INIT_PREVFRAME | -0.25% | 103% | 105% |
| MULTI_PARAM_CABAC | -0.34% | 107% | 106% |
| BIO | -2.02% | 135% | 230% |
| AFFINE | -0.97% | 121% | 109% |
| RSAF | -0.51% | 111% | 105% |
| NSST | -2.57% | 134% | 106% |
| PDPC_INTRA | -0.78% | 114% | 106% |

Based on these results, tools can be classified based on their compression performance and their complexity at encoder or decoder or both.

Complexity control by disabling tools

Enabling or disabling complex tools can be done by configuring the encoder to enable or disable such tools based on complexity vs compression performance tradeoff. This is based on an average behavior of the encoder on a test video database.

Worst case relaxation by dynamically controlling a tool can be done at frame level for example or CTU level.

Controlling tool usage can also be based on features such as block shape for example to deactivate complex tools for small blocks.

Decoding-energy-rate-distortion optimization

In a previous work, the rate distortion optimization using a Lagrange multiplier has been extended to decoding-energy-rate-distortion optimization with Lagrange multipliers. The RDO Equation becomes:

$$Cost(p) = Dist(p) + \lambda_r * Bits(p) + \lambda_c * Complexity(p) \qquad (1)$$

or

$$Cost'(p) = \lambda_r' * Dist(p) + Bits(p) + \lambda'_c * Complexity(p) \qquad (2)$$

where the value of the complexity *Complexity*(p) (or energy impact) for each coding option is defined in a table (one value for each listed tool or combination of tools). $\lambda_r$ is the Lagrange multiplier for the distortion, $\lambda_c$ is the Lagrange multiplier for the complexity.

The chosen coding mode that minimizes the *Cost'* now considers the decoding complexity:

$$\hat{p} = \underset{p \in P}{\mathrm{argmin}}(\lambda_r' * Dist(p) + Bits(p) + \lambda'_c * Complexity(p)) \qquad (3)$$

In this solution, an additive term, related to the complexity of the coding mode, is inserted in the Cost derivation.

Cost threshold using complexity factor

In another work, NN-based loop filter (NNLF) is discarded if the cost is not significantly decreased. To optimize the decoder complexity, an encoder-only tool is proposed to adaptively disable NNLF at the CTU level according to filter gain. The algorithm process is as follows.

1) Check if the block-level NNLF on/off is enabled.

2) Calculate the filter gain in terms of Sum of squared differences (SSE) of each CTU: $D_{CTU} = (I_{NNLF} - I_{ORG})^2 - (I_{REC} - I_{ORGY})^2$, where $I_{NNLF}$ is a block filtered with NNLF, $I_{ORG}$ is the original block, and $I_{REC}$ is the block reconstructed using the classical loop filters.

3) For each CTU, calculate the gain ratio: $R_{CTU} = D_{CTU}/D_{CTU}^{MAX}$ , where $D_{CTU}^{MAX} = -(I_{REC} - I_{ORG})^2$.

4) Compare all $R_{CTU}$ with a predefined threshold *r*. If $R_{CTU} < r$, disable NNLF for current CTU.

If we consider the whole video chain, power/energy is consumed at different levels: at the creation, the storage, the transmission, the decoding, and the display.

On the one hand, high compression performance will reduce storage and transmission costs, energy consumption and CO2 emissions. On the other hand, high compression performance implies the use of highly complex tools that will increase the power consumption of the decoding device. Therefore, CO2 emission reduction as well as end-device battery duration implies a joint optimization of compression performance and decoding complexity.

In current encoders, RDO solutions to take into account tool complexity at decoder side need to derive a new Lagrange multiplier which is not straightforward, or need to know the cost of all other tools before thresholding which limits the solution to a few tools tested at the end of the RDO process. Other solutions are based on completely deactivating a tool, based on performance averaged on a control video dataset, and do not consider the possible compression performance gain for specific content.

At the encoder side, decoding complexity information can be used during RDO to penalize complex tools when the compression gain is not significant, for example by weighting the computed cost with a complexity ratio during RDO. This may help reducing the power consumption on the whole video chain by reducing the use of complex compression tools when they are relatively less efficient.

In the follows, we proposed different methods. In one example, the RDO cost is weighted by a multiplicative factor related to the complexity of the coding mode. The complexity in the RDO can be defined as a function of a measure of its computational complexity. For example, the computational complexity corresponds to the number of MACs (Multiply Accumulates) per pixel, or the number of accesses to memories of neural network parameters. The complexity can be defined as a function of a complexity budget, corresponding to a complexity score progressively cumulated during the encoding of a given entity (such as a slice, a picture, a GOP).

Below are detailed the different embodiments about controlling usage of complex tools. Complex tools are for example NNIP, template-based prediction tools (e.g., DIMD, TIMD, SGPM, TMRL), matrix-based intra prediction, inter with LIC, template-based inter prediction, non-separable transforms (e.g., LFNST), or their combinations.

Cost weighting by a multiplicative complexity factor

In one embodiment, the cost function is modified to take into account a complexity factor. Once computed, the cost is weighted by a value greater than 1 to penalize a given complex tool. For example, a cost value is first computed. It is then weighted (multiplied) by the complexity factor $\beta(p)$:

$$Cost''(p) = w(p) * Cost(p)$$

The complexity factor w(p) depends on the coding parameters. It depends on the prediction tool (for example, one complexity factor is used for NNIP, while another complexity factor is used for another intra prediction mode), on the transform used, or on the combination of all parameters (for example, different complexity factors are used for MIP, NNIP, or TIMD, and the combination of MIP with TIMD; in another example, one complexity factor is used for prediction with NNIP, a second one for transform using LFNST, and a third one when NNIP is used in combination with LFNST).

The value of the complexity factor $w(p)$ is by default 1.0 (meaning no effect) if not otherwise defined. The value is for example 1.02 for the NNIP prediction tool. The values for each tool are defined in a table (one value for each listed tool or combination of tools) and can be set or modified by encoder options. An example is given in Table 3.

TABLE 3

| Coding mode (p) | complexity factor (w(p)) |
| --- | --- |
| Directional intra, lfnst 0 | 1.00 |
| DIMD, lfnst 0 | 1.001 |
| TIMD, lfnst 0 | 1.01 |
| SGPM, lfnst 0 | 1.00 |
| TMRL, lfnst 0 | 1.00 |
| MIP, lfnst 0 | 1.02 |
| NNIP, lfnst 0 | 1.03 |
| Directional intra, lfnst 1 | 1.001 |
| DIMD, lfnst 1 | 1.002 |
| TIMD, lfnst 1 | 1.015 |
| SGPM, lfnst 1 | 1.002 |
| TMRL, lfnst 1 | 1.002 |
| MIP, lfnst 1 | 1.03 |
| NNIP, lfnst 1 | 1.04 |

One difference with prior art is that the penalizing of the cost function is made by applying a multiplicative weight, instead of inserting an additive penalizing term.

In one embodiment, a complexity *Complexity(p)* may be added in the RDO, expressed as a function of a measure of the computational complexity of the coding tool of interest.

*Complexity(p)* can be used as the complexity factor $w(p) = Complexity(p)$ as in Eq. (4), or in the method as described in Eqs. (1)-(3).

In one example, the computational complexity corresponds to the number of Multiply Accumulates (MACs) per pixel. For a given $w \times h$ block, for the NNIP prediction tool, *Complexity(p)* may be expressed as a function of the number of Multiply Accumulates (MACs) per pixel, *nbMACPxl(p)*, required to predict this $w \times h$ block via NNIP (p represents NNIP).

$$Complexity(p) = f(nbMACPxl(p))$$

For instance, if nbMacPxl $(f_{h,w}(.\,,\theta_{h,w}))$ denotes the number of MACs per pixel needed to predict this $w \times h$ block via the neural network $f_{h,w}(.\,,\theta_{h,w})$ belonging to NNIP, *Camplexity(p)* may be defined as:

$$Complexity(p) = \left(1 + \frac{\text{nbMacPxl}\left(f_{h,w}\left(.\,,\boldsymbol{\theta}_{h,w}\right)\right)}{1000}\right)$$

As another example, *Complexity(p)* may be defined as:

$$Complexity(p) = \left(1 + \frac{\text{nbMacPxl}\left(f_{\text{h,w}}\left(\,.\,,\boldsymbol{\theta}_{\text{h,w}}\right)\right)}{\max\limits_{\overline{w}\times\overline{h}\in S}\left(\text{nbMacPxl}\left(f_{\overline{h},\overline{w}}\left(\,.\,,\boldsymbol{\theta}_{\overline{h},\overline{w}}\right)\right)\right)}\right)$$

As another example, in another variant, *Complexity(p)* may be expressed as a function of the number of accesses to memories of neural network parameters during the prediction of this $w \times h$ block via NNIP. *Complexity(p)* may be expressed as a function of the number of accesses to memories of neural network parameters during the prediction of this $w \times h$ block via NNIP, normalized by the size of the block to be predicted. For instance, if nbMemAccess $(f_{\text{h,w}}(\,.\,,\theta_{\text{h,w}}))$ denotes the number of accesses to memories involved in the prediction of this w $\times$ h block via the neural network $f_{\text{h,w}}(\,.\,,\theta_{\text{h,w}})$ belonging to NNIP, *Complexity(p)* may be defined as:

$$Complexity(p) = \left(1 + \frac{\text{nbMemAccess}\left(f_{\text{h,w}}\left(\,.\,,\boldsymbol{\theta}_{\text{h,w}}\right)\right)}{\alpha \times h \times w}\right)$$

*a* being a configuration parameter. For example, *a* = 1000.

In another embodiment, the complexity metric takes into account a complexity budget as a soft constraint. The complexity *Complexity(p)* may be expressed as a function of a cumulated complexity score *cumulatedScore(p)*. For instance, this cumulated complexity score may be cumulated over parts of the encoding process.

$$Complexity(p) = f(cumulatedScore(p))$$

For instance, for a given $w \times h$ block, the current cumulated complexity score of NNIP may be the cumulated estimated number of instructions due to the applications of NNIP from the beginning of the encoding of the current frame to the beginning of the encoding of this given $w \times h$ block.

As another example, the current cumulated complexity score of NNIP may be the cumulated estimated number of instructions due to the applications of NNIP from the beginning of the encoding of the current Group Of Picture (GOP) to the beginning of the encoding of this given $w \times h$ block.

As another example, the current cumulated complexity score of NNIP may be the cumulated number of MACs due to the applications of NNIP from the beginning of the encoding of the current frame to the beginning of the encoding of this given $w \times h$ block.

As another example, the current cumulated complexity score of NNIP may be the cumulated number of MACs due to the applications of NNIP from the beginning of the encoding of the current GOP to the beginning of the encoding of this given $w \times h$ block.

As another example, the current cumulated complexity score of NNIP may be the cumulated number of MACs due to the applications of NNIP from the beginning of the encoding of the current Coding Tree Unit (CTU) containing this given $w \times h$ block to the beginning of the encoding of this given $w \times h$ block, denoted macsCtu.

For instance,

$$Complexity(p) = \text{macsCtu} < \text{maxMacsCtu}\,?\,1:2$$

where maxMacsCtu may denote the maximum cumulated number of MACs arising from the applications of NNIP from the beginning of the encoding of the current CTU to the beginning of the encoding of this given $w \times$ h block. For instance, maxMacsCtu = 20000. As another example, maxMacsCtu = $\gamma$/ctuSize , ctuSize denoting the CTU size. For example, $\gamma$ = 40000. As another example, $\gamma$ = 50000. As another example, $\gamma$ may be a configuration parameter.

As another example,

$$Complexity(p) = \text{macsCtu} < \text{maxMacsCtu}\,?\,1:4 \times \text{costBit}$$

costBit being the cost of writing a bit to the bitstream in equi-probability, also called "by-pass" coding.

As another example, the current cumulated complexity score of NNIP may be the cumulated number of accesses to memories of neural network parameters (e.g., weights) during the applications of NNIP from the beginning of the encoding of the current CTU containing this given $w \times h$ block to the beginning of the encoding of this given $w \times h$ block, denoted memAccessCtu.

For instance,

$$Complexity(p) = \text{memAccessCtu} < \text{maxMemAccessCtu} ? 1 : 3$$

where maxMemAccessCtu may denote the maximum cumulated number of accesses to memories of neural network parameters during the applications of NNIP from the beginning of the encoding of the current CTU to the beginning of the encoding of this given $w \times h$ block. For instance, maxMemAccessCtu = 10000. As another example, maxMemAccessCtu = v/ctuSize, ctuSize denoting the CTU size. For example, v = 5000. As another example, v may be a configuration parameter.

As another example,

$$Complexity(p) = \text{memAccessCtu} < \text{maxMemAccessCtu} ? 1 : 2 \times \text{costBit}$$

costBit being the cost of writing a bit to the bitstream in equi-probability, also called "by-pass" coding.

For instance, any of the previous examples involving NNIP may be straightforwardly applied to the matrix-based intra prediction. More generally, any of the previous examples involving NNIP may be straightforwardly applied to a neural network-based intra prediction.

Cost threshold using complexity factor

Cost thresholding can be applied by CU when a complex tool such as NNIP is used and after other conventional compression tools.

For example, this can be done by comparing the best cost obtained so far for a given block $Cost_{best}$ in the encoding process, to the cost obtained by the current complex tool or combination of tool $Cost_{curr}$. The current result is discarded if the current cost obtained so far $Cost_{curr}$ is not below (better than) $Cost_{best}$ weighted by a value $w(p)$ lower than 1.0, for example by setting the cost to the greatest possible value, so that the encoder won't choose the complex tool. The weighting value $w(p)$ depends on the complexity of the coding mode. For example, $w(p)$ = 0.98 if NNIP is used.

The following pseudo-code illustrates the RDO loop, for choosing the best coding mode $mode_{best}$ among the list of all coding modes, and its associated cost $Cost_{best}$:

$$Cost_{best} = \text{MAX\_VALUE};$$

$$mode_{best} = \text{UNDEFINED}$$

$$\text{for } mode \text{ in } allmodes \; \{$$

$$\quad Cost_{curr} = \text{checkRD}( mode );$$

$$\quad \text{if } (Cost_{curr} > Cost_{best} * w(p)) \; \{$$

$$\quad\quad Cost_{curr} = \text{MAX\_VALUE};$$

$$\quad \}$$

$$\quad \text{if } (Cost_{curr} < Cost_{best}) \; \{$$

$$\quad\quad Cost_{best} = Cost_{curr};$$

$$\quad\quad mode_{best} = mode;$$

$$\quad \}$$

$$\}$$

where checkRD() is a function that will compute the cost of using a compression tool. Typically, the cost is derived from a distortion (e.g., SAD: Sum of Absolute Differences) between the original block and a reconstructed block using the coding tool, and the number of bits to encode the coding parameters and residual. $w(p)$ is a weighting complexity factor lower than 1 to penalize coding parameters $p$ (the more complex the tool or combination of tools is, the lower the weight).

Alternatively, $Cost_{curr}$ is weighted by a value greater than 1 (the more complex the tool or combination of tools is, the greater the weight):

$$\text{if}\,(Cost_{curr} * w(p) > Cost_{best})\,\{$$

$$Cost_{curr} = \text{MAX\_VALUE};$$

$$\}$$

Cost threshold / complexity weighting mode switching based on complexity value

In this embodiment, the RDO mode depends on the value of the weight $w(p)$ for the given coding option set $p$. The different methods coexist in the RDO process. The RDO mode dynamically changes depending on the tool being tested and the value of $w(p)$.

- If the complexity factor $w(p)$ is below 1, use cost thresholding:

$$\text{if}\,(Cost_{curr} > Cost_{best} * w(p))\,\{$$

$$Cost_{curr} = \text{MAX\_VALUE};$$

$$\}$$

$$\text{if}\,(Cost_{curr} < Cost_{best})\,\{$$

$$Cost_{best} = Cost_{curr};$$

$$mode_{best} = mode;$$

$$\}$$

In this cost threshold mode, if the cost is larger than the weighted best cost, the cost is set to a large value. If the coding mode is still better than what has been tested so far, the coding mode is kept and its original cost is saved as best cost. The weighted cost won't be considered for further tested coding modes, if any.

- If the complexity factor $w(p)$ is above 1, use the complexity weighting mode:

$$Cost_{curr}(p) = w(p) * Cost_{curr}(p)$$

$$\text{if}\,(Cost_{curr} < Cost_{best})\,\{$$

$$Cost_{best} = Cost_{curr};$$

$$mode_{best} = mode;$$

$$\}$$

Here the cost is modified by the weighting value, so that if the current mode is the best, the weighted cost value is saved as best cost. This weighted best cost will be considered if RDO continues with more coding modes.

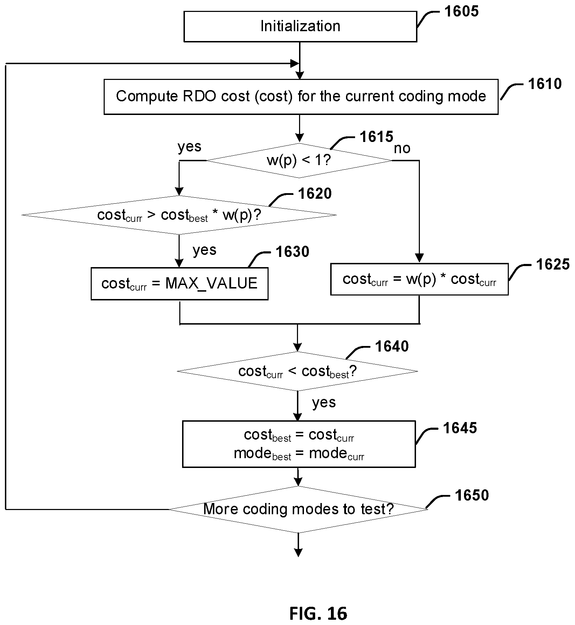

The RDO loop is modified as illustrated in FIG. 16, according to this embodiment.

$$Cost_{best} = \text{MAX\_VALUE}$$

$$mode_{best} = \text{UNDEFINED}$$

$$\text{for } mode \text{ in } allmodes \ \{$$

$$\quad Cost_{curr} = \text{checkRD}( mode );$$

$$\quad \text{if } (w(p) < 1) \qquad \{$$

$$\quad\quad \text{if } (Cost_{curr} > Cost_{best} * w(p)) \ \{$$

$$\quad\quad\quad Cost_{curr} = \text{MAX\_VALUE};$$

$$\quad\quad \}$$

$$\quad \}$$

$$\quad \text{else if } (w(p) > 1) \ \{$$

$$\quad\quad Cost_{curr} = w(p) \times Cost_{curr};$$

$$\quad \}$$

$$\quad \text{if } (Cost_{curr} < Cost_{best}) \ \{$$

$$\quad\quad Cost_{best} = Cost_{curr};$$

$$\quad\quad mode_{best} = mode;$$

$$\quad \}$$

$$\}$$

In particular, the encoder performs initialization (1605) for the current RDO, e.g., by setting $Cost_{best}$ to $\text{MAX\_VALUE}$ and $mode_{best}$ to UNDEFINED. Then the encoder checks for all possible coding modes in the RDO loop. For the current coding mode under test, the encoder computes (1610) the RDO cost ($Cost_{curr}$). The encoder checks (1615) the complexity factor $w(p)$. If $w(p)$ is below 1, cost thresholding is used; otherwise, complexity weighting is used.

In the cost thresholding mode, the current cost is compared (1620) with the current minimum (best) cost weighted by $w(p)$. If the current cost is larger than the weighted best cost, the cost is set to a large value (i.e., thresholding, 1630). In the complexity weighting mode, the cost is scaled (1625) by the weighting value $w(p)$, so that if the current mode is the best, the weighted cost value is saved as best cost. This weighted best cost will be considered if RDO continues with more coding modes.

If the current cost is still better than what has been tested so far (1640), the coding mode is kept and the is saved as best cost (1645). At 1650, the encoder checks if more coding modes are to be tested. If yes, the control returns to step 1610; otherwise, the RDO process is completed.

Non-uniform cost weighting

The RDO is a multi-level recursive loop. The cost is computed at different levels of the recursive loop. For example, different coding modes are tested by computing and comparing their corresponding RD costs at one level. At another level, the RD cost is computed to test whether the block should be coded at the given block size or split into smaller sub-blocks, each sub-block being recursively studied. At another level, the RD cost is computed to test which split mode should be used. In this embodiment, the complexity weighting is not used for every computation of the RD cost. For example, it can be used when comparing different coding options for a given CU, but not when evaluating the partitioning. For the partitioning choice (e.g., for coding a 8x8 block, between 4 4x4, 2 4x8 or one 8x8 sub-blocks), it is assumed, the best coding option has already been chosen based on a valid cost computation (e.g., for the 4×4, 4×8 or 8×8 sub-blocks).

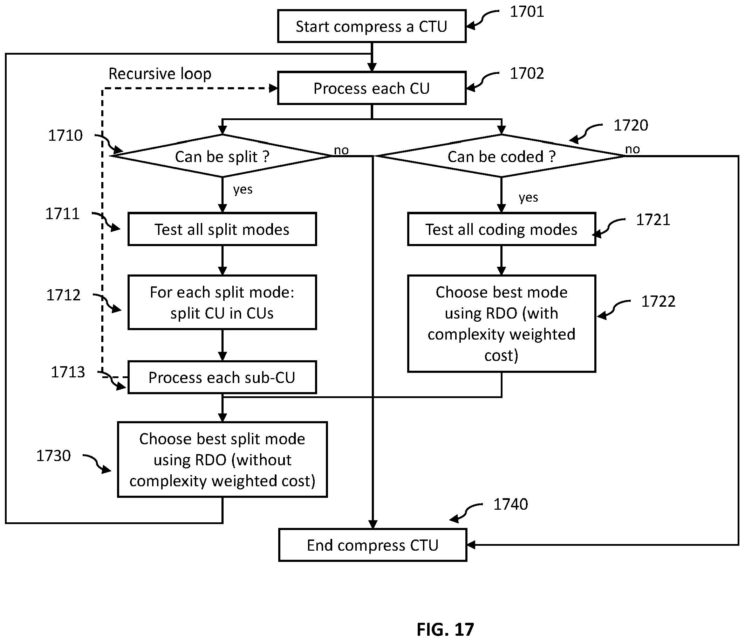

FIG. 17 illustrates an example of non-uniform cost weighting. In particular, the compression of CTU starts at step 1701. At step 1702, each CU is to be processed. The encoder first checks if the CU can be coded (1720) and if it can be split (1710). If it can be split, all split modes are tested (1711) (binary tree, quadtree, triple tree, asymmetric binary tree...). Then, for each available split mode the CU is split into sub-CUs (1712) all the sub-CUs are processed (1713) in a recursive manner: it can be further recursively split or coded. If the CU can be coded (1720), all the available modes are tested (1721). To choose the best mode, the RDO uses a complexity weighted mode (1722) as described above. Then, the RDO chooses the best between all the split modes and the coded CU (1730) (coded CU can be recursively split) using classical RDO equation (i.e., without complexity weighting), the best coding modes for that CU is saved and the process goes back to the parent CU. When all the CUs have been recursively processed, the process ends (1740).

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various methods and other aspects described in this application can be used to modify the decision modules, of a video encoder 200 as shown in FIG. 2. Moreover, the present aspects are not limited to ECM, VVC or HEVC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1. A method of video encoding, comprising:

   obtaining a first value indicating a number of bits used to encode a current block in a picture, under a coding option;
   obtaining a second value indicating a distortion between a reconstructed version and an original version of the current block associated with the coding option;
   obtaining a cost function based on the first value and the second value for the current block;
   obtaining another cost function for the current block, associated with a current best coding option;
   comparing the cost function and the another cost function, wherein the cost function or the another cost function is scaled by a complexity factor indicating computational complexity associated with the coding option; and
   updating the another cost function and the current best coding option based on the comparing.

2. An apparatus for video encoding, comprising at least one memory and one or more processors, wherein the one or more processors are configured to:

   obtain a first value indicating a number of bits used to encode a current block in a picture, under a coding option;
   obtain a second value indicating a distortion between a reconstructed version and an original version of the current block associated with the coding option;
   obtain a cost function based on the first value and the second value for the current block;
   obtain another cost function for the current block, associated with a current best coding option;
   compare the cost function and the another cost function, wherein the cost function or the another cost function is scaled by a complexity factor indicating computational complexity associated with the coding option; and
   update the another cost function and the current best coding option based on the comparing.

3. The method of claim 1, or the apparatus of claim 2, wherein the comparing and updating are performed for a plurality of coding options, and a coding option corresponding to the another cost function after performing for the plurality of coding options is used to encode the current block.

4. The method of claim 1 or 3, or the apparatus of claim 2 or 3, wherein the cost function is scaled by the complexity factor, and wherein the another cost function is updated to the scaled cost function, responsive to that the scaled cost function is smaller than the another cost function.

5. The method of claim 1 or 3, or the apparatus of claim 2 or 3, wherein the another cost function is scaled by the complexity factor and the cost function to is adjusted to a large value responsive to that the cost function being larger than the scaled another cost function.

6. The method of any one of claims 1 and 3-5, further comprising, or the apparatus of any one of claims 2-5, wherein the one or more processors are configured to perform:
   determining whether to adjust the cost function or the another cost function, based on a value of the complexity factor.

7. The method of any one of claims 1 and 3-6, or the apparatus of any one of claims 2-6, wherein the complexity factor is indicative of a number of Multiply Accumulates (MACs) per pixel for encoding the current block.

8. The method of any one of claims 1 and 3-6, or the apparatus of any one of claims 2-6, wherein the complexity factor is indicative of a number of accesses to memory.

9. The method of any one of claims 1 and 3-6, or the apparatus of any one of claims 2-6, wherein the complexity factor is indicative of a number of instructions.

10. The method of any one of claims 1 and 3-9, or the apparatus of any one of claims 2-9, wherein rate distortion optimization is performed at different levels, wherein rate distortion optimization at one level depends on the complexity factor and rate distortion optimization at another level does not depend on the complexity factor.

11. The method of claim 10, or the apparatus of claim 10, wherein rate distortion optimization at the one level performs partitioning.

12. A signal comprising video data, formed by performing the method of any one of claims 1 and 3-11.

13. A computer readable storage medium having stored thereon instructions for encoding a video according to the method of any one of claims 1 and 3-11.

**FIG. 1**

EP 4 676 026 A1

FIG. 2

**FIG. 3**

gradient
filter

FIG. 4

direction of positive
horizontal gradient

direction of positive
vertical gradient

(1)

$G_{HOR}$ and $G_{VER}$
having opposite
signs

$G_{HOR}$ and $G_{VER}$
having same sign

(2)

$|G_{VER}| > |G_{HOR}|$

(4)

(3)

$G_{HOR}$ and $G_{VER}$
having opposite
signs

$G_{HOR}$ and $G_{VER}$
having same
sign

$|G_{HOR}| \geq |G_{VER}|$

In the framework of ECM using the VVC directional intra prediction modes
- (1) : target intra prediction mode index belonging to $[\![2, 17]\!]$
- (2) : target intra prediction mode index belonging to $[\![19, 33]\!]$
- (3) : target intra prediction mode index belonging to $[\![34, 49]\!]$
- (4) : target intra prediction mode index belonging to $[\![51, 66]\!]$
- if $G_{VER} == 0$, target intra prediction mode is vertical, i.e. its index is 50
- if $G_{HOR} == 0$, target intra prediction mode is horizontal, i.e. its index is 18.

**FIG. 5**

direction of positive
horizontal gradient

direction of positive
vertical gradient

$G_{VER}$

$G$

(1)

$G_{HOR}$

$\theta$

90°

$\theta$

reference
horizontal axis

direction of the target
intra prediction mode

(2)

(4)    (3)

$$\tan(\theta) = \frac{|G_{HOR}|}{|G_{VER}|}$$

**FIG. 6**

direction of positive horizontal gradient

direction of positive vertical gradient

$G_{VER}$

$G$  (1)

$G_{HOR}$

$90°$

$\theta$

(2)

(4)  (3)

$\theta$

direction of the target intra prediction mode

reference vertical axis

$$\tan(\theta) = \frac{|G_{VER}|}{|G_{HOR}|}$$

FIG. 7

$$i^* = \min_i |A_i - \dot\theta| = 7$$

target intra prediction mode index = 18 + $i^*$ = 25

**FIG. 8**

$$i^* = \min_i |A_i - \theta| = 4$$

target intra prediction mode index = 50 - $i^*$= 46

(1)

(2)

(4)   (3)

$A_{16} = 65536$

$A_0 = 0$   $A_2 = 4096$

$A_1 = 2048$   $A_3 = 6144$

$A_4 = 8192$

reference
vertical axis

direction of the target
intra prediction mode

**FIG. 9**

region ABOVE-LEFT          region ABOVE

$l_a$

region LEFT

$h$

$l_l$          $w$

**FIG. 10**

EP 4 676 026 A1

**FIG. 11A**

**FIG. 11B**

**FIG. 11C**

EP 4 676 026 A1

**FIG. 12**

**FIG. 13**

FIG. 14

EP 4 676 026 A1

$$w \times h \in T$$
$$\&\& \; x \geq n_l$$
$$\&\& \; y \geq n_a ?$$

yes   no

$\mathcal{S}_\subset$   $\mathcal{S}_\subset$

**0** (nnFlag = 0)

nnFlag ?

**1** (nnFlag = 1)

$\mathcal{S}$   END

FIG. 15

EP 4 676 026 A1

**FIG. 16**

Initialization — 1605

Compute RDO cost (cost) for the current coding mode — 1610

1615 — w(p) < 1?

no → cost$_{curr}$ = w(p) * cost$_{curr}$ — 1625

yes → cost$_{curr}$ > cost$_{best}$ * w(p)? — 1620

yes → cost$_{curr}$ = MAX_VALUE — 1630

1640 — cost$_{curr}$ < cost$_{best}$?

yes → cost$_{best}$ = cost$_{curr}$, mode$_{best}$ = mode$_{curr}$ — 1645

1650 — More coding modes to test?

FIG. 17

Europäisches
Patentamt

European
Patent Office

Office européen
des brevets

## EUROPEAN SEARCH REPORT

**Application Number**

EP 24 30 6070

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/098316 A1 (VERMEIR THIJS [BE] ET AL) 28 March 2019 (2019-03-28) * abstract * * paragraphs [0008] - [0011], [0015], [0104] - [0109] * ----- | 1-13 | INV. H04N19/102 H04N19/147 H04N19/15 H04N19/154 H04N19/176 |
| A | US 11 076 153 B2 (STC UNM [US]) 27 July 2021 (2021-07-27) * abstract * * paragraphs [0012], [0017], [0051] - [0053], [0060], [0064], [0068] - [0070], [0083], [0091], [0098] * * figures 1, 5A, 5B * ----- | 1-13 | |

**TECHNICAL FIELDS SEARCHED (IPC)**

H04N

The present search report has been drawn up for all claims

| Place of search | Date of completion of the search | Examiner |
|---|---|---|
| Munich | 25 November 2024 | Fassnacht, Carola |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 30 6070

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2024

| Patent document cited in search report | Publication date | Patent family member(s) | | Publication date |
|---|---|---|---|---|
| US 2019098316 A1 | 28-03-2019 | CN | 108886614 A | 23-11-2018 |
| | | EP | 3434014 A1 | 30-01-2019 |
| | | TW | 201801529 A | 01-01-2018 |
| | | US | 2019098316 A1 | 28-03-2019 |
| | | WO | 2017162845 A1 | 28-09-2017 |
| US 11076153 B2 | 27-07-2021 | US | 2018220133 A1 | 02-08-2018 |
| | | WO | 2017023829 A1 | 09-02-2017 |

EPO FORM P0459

For more details about this annex : see Official Journal of the European Patent Office, No. 12/82